# EUROPEAN PATENT APPLICATION

(11) **EP 4 847 793 A1**
(43) Date of publication of application: **02.12.2026**
(21) Application number: 24920064.3
(22) Date of filing: 20.12.2024
(51) Int. Cl.: F16C 33/64, B23K 26/04, B23K 26/342, F16C 19/22

(54) **METHOD FOR MACHINING RACEWAY SURFACE OF ROLLING BEARING, AND METHODS FOR REPAIRING AND PRODUCING BEARING RING OF ROLLING BEARING**

(30) Priority: 25.01.2024 JP 2024009733
(71) Applicant: NSK Ltd., Tokyo 141-8560 (JP)
(72) Inventor: KODAMA, Haruna, Fujisawa-shi, Kanagawa 251-8501 (JP); SHODA, Hiroki, Fujisawa-shi, Kanagawa 251-8501 (JP); SUGANUMA, Kentaro, Fujisawa-shi, Kanagawa 251-8501 (JP)
(74) Representative: Müller-Boré & Partner Patentanwälte PartG mbB
(86) International application number: PCT/JP2024/045216
(87) International publication number: WO 2025/158841

(57) **Abstract**

A method capable of preventing an internal defect from occurring in a clad layer having a raceway surface on a surface thereof is achieved. The method includes a cladding step of irradiating a laser 10 emitted from a laser source onto a raceway surface 4a (or a portion of a base member where a raceway surface is to be formed) provided on an inner circumferential surface or an outer circumferential surface of a bearing ring 3a, and supplying a filler material 11 to a portion of the raceway surface 4a irradiated with the laser 10, while relatively rotating the laser source and relatively displacing the laser source in a width direction of the raceway surface 4a (or the portion where the raceway surface is to be formed) with respect to the bearing ring 3a, so as to form a clad portion 15 constituted by a plurality of annular beads or a bead wound without a gap on the raceway surface 4a. In the cladding step, an irradiation direction of the laser 10 with respect to the raceway surface 4a is set to a forward-inclined direction with respect to a normal direction of the raceway surface 4, in relation to a relative displacement direction in the axial direction of the laser source with respect to the bearing ring 3a.

## Description

### TECHNICAL FIELD

The present disclosure relates to a processing method of a raceway surface of a rolling bearing, specifically, to a repair method and a manufacturing method of a bearing ring of a radial rolling bearing or a thrust bearing.

### BACKGROUND ART

A rotating shaft of a rotating machine such as a machine tool and an industrial machine is supported by a rolling bearing with respect to a portion that does not rotate during use, such as a housing. The rolling bearing includes a pair of bearing rings that have raceway surfaces over an entire circumference on surfaces facing each other and that are arranged so as to be coaxial with each other, and a plurality of rolling elements that are arranged between the raceway surfaces of the pair of bearing rings so as to be able to roll freely. Specifically, such rolling bearings include a radial rolling bearing for mainly supporting a load in the radial direction and a thrust rolling bearing for mainly supporting a load in the axial direction.

The radial rolling bearing includes an inner ring that has an inner ring raceway on an outer circumferential surface thereof, an outer ring that has an outer ring raceway on an inner circumferential surface thereof and that is arranged so as to be coaxial with the inner ring on the inner side in the radial direction of the inner ring, and a plurality of rolling elements that are arranged between the inner ring raceway and the outer ring raceway so as to be able to roll freely

The thrust rolling bearing includes a pair of bearing rings that have raceway surfaces over an entire circumference on side surfaces facing each other in the axial direction and that are arranged so as to be coaxial with each other, and a plurality of rolling elements that are arranged between the raceway surfaces of the pair of bearing rings so as to be able to roll freely.

Regardless of whether the rolling bearing is a radial rolling bearing or a thrust rolling bearing, when the rolling bearing is used for a long time in a state where a load is applied, wear may occur on the raceway surface, or metal fatigue may occur and the raceway surface may peel. When damage such as wear or peeling occurs on the raceway surface, it is conceivable to replace the bearing ring or the entire rolling bearing including the bearing ring.

However, from the aspect of reducing the operating cost of the rotating machine, it is desirable to continue using the bearing ring after repairing the raceway surface on which damage such as wear or peeling has occurred, instead of replacing the bearing ring or the rolling bearing. In particular, there is a strong demand for this regarding a large-sized bearing such as a roll neck bearing for a steel rolling mill. As roll neck bearings, for example, a large-sized tapered roller bearing and a cylindrical roller bearing are used.

JP2021-025598A discloses a repair method of a bearing ring in which a clad portion is formed over an entire circumference on an inner ring raceway by laser cladding, and a new inner ring raceway is formed by performing a polishing process to a surface of the clad portion. According to the method described in JP2021-025598A, it is possible to repair a raceway surface on which damage such as wear or peeling has occurred, without providing a machining allowance in advance on a surface layer of the inner ring raceway.

### CITATION LIST

### PATENT LITERATURE

Patent Literature 1: JP2021-025598A

### SUMMARY OF INVENTION

### TECHNICAL PROBLEM

In a case where a wide range in the axial direction is repaired by the conventional method described in JP2021-025598A, it is conceivable to form, on the inner ring raceway, a clad portion that is formed by arranging a plurality of annular beads without a gap in the axial direction, or that is constituted by a bead wound helically without a gap, by laser cladding in which the laser source is relatively rotated and relatively displaced in the axial direction with respect to the inner ring while supplying a filler material. However, in a case where such a clad portion is formed by the conventional method described in JP2021-025598A, there is a possibility that an internal defect occurs.

An internal defect occurs when, during laser cladding, a bubble is generated in a molten metal material (a molten pool) due to gas existing in the filler material or gas mixed in from the outside, and the metal material solidifies before the bubble is discharged to the outside.

In a case where a clad portion that is formed by arranging a plurality of annular beads without a gap in the axial direction is formed on the inner ring raceway by the conventional method described in JP2021-025598A, for example, first, a laser is irradiated onto the inner ring raceway, and the inner ring is rotated once while supplying a filler material to a portion irradiated with the laser so as to form an annular bead. Next, the inner ring is relatively displaced in the axial direction with respect to the laser source. At this time, an amount of relative displacement in the axial direction of the inner ring with respect to the laser source is adjusted so that a gap does not exist between two beads adjacent to each other in the axial direction. Then, again, a laser is irradiated onto the inner ring raceway, and the inner ring is rotated once while supplying a filler material to a portion irradiated with the laser so as to form an annular bead. As described above, the clad portion is formed by repeating a step of forming an annular bead and a step of relatively displacing the inner ring in the axial direction with respect to the laser source.

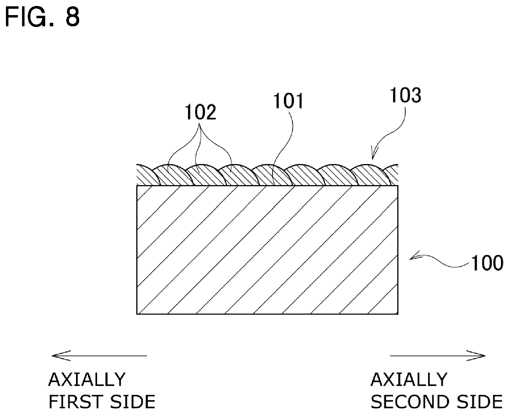

As illustrated in FIG. 8, in a case where a clad portion 103 that is formed by arranging a plurality of annular beads 102 without a gap in the axial direction is formed on an inner ring raceway 101 of an inner ring 100, of the two beads 102 adjacent to each other in the axial direction, a portion on a first side in the axial direction (the left side in FIG. 8) of the bead 102 on a second side in the axial direction (the right side in FIG. 8) is arranged so as to overlap in the radial direction on a portion on the second side in the axial direction of the bead 102 on the first side in the axial direction.

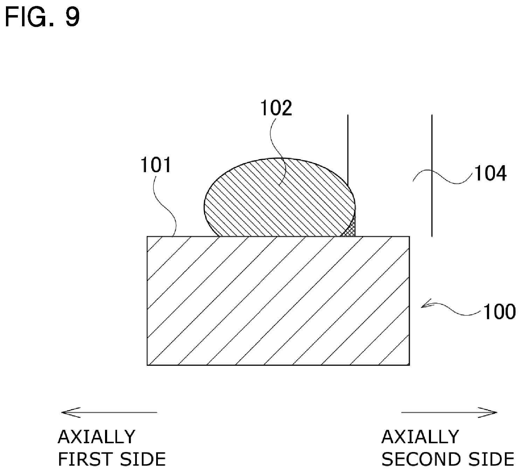

In practice, the bead 102 has a substantially partially elliptical cross-sectional shape, as illustrated in an exaggerated manner in FIG. 9. In the conventional method described in JP2021 - 025598A, the laser 104 is irradiated onto the inner ring raceway 101 in the radial direction. Therefore, in a case where the laser 104 is irradiated in the radial direction in order to form the bead 102 on the second side in the axial direction at a portion (a portion indicated by oblique hatching in FIG. 9) adjacent to the second side in the axial direction of the bead 102 on the first side in the axial direction, there is a possibility that a portion of the inner ring raceway 101 located on the inner side in the radial direction of an end portion on the second side in the axial direction of the bead 102 on the first side in the axial direction cannot be sufficiently heated.

Also in a case where the clad portion is constituted by a bead wound helically without a gap, when a laser is irradiated in the radial direction in order to form the bead at a portion adjacent in the axial direction to a portion of the bead that has been formed earlier, there is a possibility that a portion located on the inner side in the radial direction of an end portion in the axial direction of the portion that has been formed earlier cannot be sufficiently heated.

In any case, when a portion where heating by the laser cannot be sufficiently performed occurs, in the portion, it becomes easier for the molten metal material to solidify at an early stage before the bubble is discharged, and it becomes easier for an internal defect resulting from the bubble to occur inside the clad portion.

The above-described problem occurs similarly not only in a case where a clad portion by laser cladding is formed in order to repair the raceway surface, but also in a case where a clad portion by laser cladding is formed at a portion where the raceway surface is to be formed when manufacturing a bearing ring from scratch.

An object of the present disclosure is to achieve a repair method and a manufacturing method of a bearing ring that can prevent an internal defect from occurring in a clad layer having a raceway surface on a surface thereof.

### SOLUTION TO PROBLEM

A processing method of a raceway surface of a rolling bearing according to an aspect of the present disclosure includes:
a cladding step of irradiating a laser emitted from a laser source onto a raceway surface of a bearing ring or a portion of a base member where a raceway surface is to be formed, and while supplying a filler material to a portion irradiated with the laser, while relatively rotating the laser source and relatively displacing the laser source in a width direction of the raceway surface or the portion where the raceway surface is to be formed with respect to the bearing ring or the base member, so as to form a clad portion that is (1) formed by arranging a plurality of annular beads without a gap in the width direction, or (2) constituted by a bead wound without a gap in the width direction, on the raceway surface or the portion where the raceway surface is to be formed.

In particular, in the processing method of a raceway surface of a rolling bearing according to an aspect of the present disclosure, in the cladding step, the irradiation direction of the laser with respect to the raceway surface or the portion where the raceway surface is to be formed is set to a forward-inclined direction with respect to a normal direction at the portion irradiated with the laser, in relation to a relative displacement direction of the laser source with respect to the bearing ring or the base member.

In a case where the processing method of a raceway surface of a rolling bearing is applied to a repair method of a bearing ring of a rolling bearing, a target of the processing is the raceway surface of the bearing ring, and in a case where the processing method is applied to a manufacturing method of a bearing ring of a rolling bearing, a target of the processing is the portion of the base member where the raceway surface is to be formed.

In the processing method of a raceway surface of a rolling bearing according to an aspect of the present disclosure, an inclination angle with respect to the normal direction can be set to 5 degrees or more and less than 90 degrees, preferably 10 degrees or more and 20 degrees or less, and more preferably 15 degrees or more and 20 degrees or less.

In a case where the processing method of a raceway surface of a rolling bearing is applied to a repair method or a manufacturing method of a bearing ring of a radial rolling bearing, the width direction, that is, the relative displacement direction of the laser source with respect to the bearing ring or the base member, is the axial direction. On the other hand, in a case where the processing method of a raceway surface of a rolling bearing is applied to a repair method or a manufacturing method of a bearing ring of a thrust rolling bearing, the width direction, that is, the relative displacement direction of the laser source with respect to the bearing ring or the base member, is the radial direction.

A repair method of a bearing ring of a radial rolling bearing according to an aspect of the present disclosure includes:
a cladding step of irradiating a laser emitted from a laser source onto a raceway surface provided on an inner circumferential surface or an outer circumferential surface of a bearing ring, and supplying a filler material to a portion of the raceway surface irradiated with the laser, while relatively rotating the laser source and relatively displacing the laser source in the axial direction with respect to the bearing ring, so as to form a clad portion that is formed by arranging a plurality of annular beads without a gap in the axial direction or that is constituted by a bead wound helically without a gap on the raceway surface,.

In particular, in the repair method of a bearing ring of a radial rolling bearing according to an aspect of the present disclosure, in the cladding step, the irradiation direction of the laser with respect to the raceway surface is set to a forward-inclined direction, with respect to a normal direction of the raceway surface (a normal direction at a portion of the raceway surface irradiated with the laser), in relation to a relative displacement direction in the axial direction of the laser source with respect to the bearing ring.

In the repair method of a bearing ring of a radial rolling bearing according to an aspect of the present disclosure, the inclination angle of the irradiation direction of the laser with respect to the normal direction of the raceway surface can be set to 5 degrees or more and less than 90 degrees, preferably 10 degrees or more and 20 degrees or less, and more preferably 15 degrees or more and 20 degrees or less.

A manufacturing method of a bearing ring of a radial rolling bearing according to an aspect of the present disclosure, the bearing ring of the radial rolling bearing including a cylindrical base member; a clad layer covering an inner circumferential surface or an outer circumferential surface of the base member over an entire circumference; and a raceway surface provided over an entire circumference on a surface of the clad layer;
the method including:
a cladding step of irradiating a laser emitted from a laser source onto the inner circumferential surface or the outer circumferential surface of the base member, and supplying a filler material to a portion of the inner circumferential surface or the outer circumferential surface of the base member irradiated with the laser, while relatively rotating the laser source and relatively displacing the laser source in the axial direction with respect to the base member, so as to form a clad portion that is formed by arranging a plurality of annular beads without a gap in the axial direction or that is constituted by a bead wound helically without a gap on the inner circumferential surface or the outer circumferential surface of the base member; and
a machining step of performing machining to a surface of the clad portion, so as to form a cladded layer having the raceway surface on a surface thereof.

In particular, in the manufacturing method of a bearing ring of a radial rolling bearing according to an aspect of the present disclosure, in the cladding step, the irradiation direction of the laser with respect to the inner circumferential surface or the outer circumferential surface of the base member is set to a forward-inclined direction, with respect to the normal direction of the inner circumferential surface or the outer circumferential surface of the base member (the normal direction at the portion of the inner circumferential surface or the outer circumferential surface of the base member irradiated with the laser), in relation to the relative displacement direction in the axial direction of the laser source with respect to the base member.

In the manufacturing method of a bearing ring of a radial rolling bearing according to an aspect of the present disclosure, the inclination angle of the irradiation direction of the laser with respect to the normal direction of the inner circumferential surface or the outer circumferential surface of the base member can be set to 5 degrees or more and less than 90 degrees, preferably 10 degrees or more and 20 degrees or less, and more preferably 15 degrees or more and 20 degrees or less.

A repair method of a bearing ring of a thrust rolling bearing according to the present disclosure includes:
a cladding step of irradiating a laser emitted from a laser source onto a raceway surface provided on a side surface in the axial direction of a bearing ring, and supplying a filler material to a portion of the raceway surface irradiated with the laser, while relatively rotating the laser source and relatively displacing the laser source in the radial direction with respect to the bearing ring, so as to form a clad portion that is formed by arranging a plurality of annular beads in the radial direction or that is constituted by a bead wound spirally without a gap on the raceway surface,.

In particular, in the repair method of a bearing ring of a thrust rolling bearing according to an aspect of the present disclosure, in the cladding step, the irradiation direction of the laser with respect to the raceway surface is set to a forward-inclined direction, with respect to the normal direction of the raceway surface, in relation to the relative displacement direction in the radial direction of the laser source with respect to the bearing ring.

In the repair method of a bearing ring of a thrust rolling bearing according to an aspect of the present disclosure, the inclination angle of the irradiation direction of the laser with respect to the normal direction of the raceway surface can be set to 5 degrees or more and less than 90 degrees, preferably 10 degrees or more and 20 degrees or less, and more preferably 15 degrees or more and 20 degrees or less.

A manufacturing method of a bearing ring of a thrust rolling bearing according to an aspect of the present disclosure, the bearing ring of the thrust rolling bearing including a hollow circular plate-shaped base member; a clad layer covering a side surface in the axial direction of the base member over an entire circumference; and a raceway surface provided over an entire circumference on a surface of the clad layer;
the method including:
a cladding step of irradiating a laser emitted from a laser source onto the side surface in the axial direction of the base member, and supplying a filler material to a portion of the side surface in the axial direction of the base member irradiated with the laser, while relatively rotating the laser source and relatively displacing the laser source in the radial direction with respect to the side surface in the axial direction of the base member, so as to form a clad portion that is formed by arranging a plurality of annular beads without a gap in the radial direction or that is constituted by a bead wound spirally without a gap on the side surface in the axial direction of the base member; and
a machining step of performing machining to a surface of the clad portion so as to form a clad layer having the raceway surface on a surface thereof.

In particular, in the manufacturing method of a bearing ring of a thrust rolling bearing according to an aspect of the present disclosure, in the cladding step, the irradiation direction of the laser with respect to the side surface in the axial direction of the base member is set to a forward-inclined direction, with respect to the normal direction of the side surface in the axial direction of the base member, in relation to the relative displacement direction in the radial direction of the laser source with respect to the bearing ring.

In the manufacturing method of a bearing ring of a thrust rolling bearing according to an aspect of the present disclosure, the inclination angle of the irradiation direction of the laser with respect to the normal direction of the side surface in the axial direction of the base member can be set to 5 degrees or more and less than 90 degrees, preferably 10 degrees or more and 20 degrees or less, and more preferably 15 degrees or more and 20 degrees or less.

### EFFECT OF INVENTION

With the processing method of a raceway surface of a rolling bearing, the repair method and the manufacturing method of a bearing ring of a radial rolling bearing, and the repair method and the manufacturing method of a bearing ring of a thrust rolling bearing of the present disclosure as described above, it is possible to prevent an internal defect from occurring in the clad layer having the raceway surface on the surface thereof.

### BRIEF DESCRIPTION OF DRAWINGS

[FIG. 1] FIG. 1 is a partially cutaway perspective view illustrating a radial cylindrical roller bearing including a bearing ring to which a repair method of a bearing ring of a radial rolling bearing of a first example of an embodiment of the present disclosure can be applied.
[FIG. 2] FIG. 2 is an enlarged schematic view of a portion corresponding to a portion X of FIG. 1.
[FIG. 3] FIG. 3(A) is a partially enlarged cross-sectional view illustrating an original inner ring raceway before repair, FIG. 3(B) is a partially enlarged cross-sectional view illustrating a state where a clad portion is formed on the original inner ring raceway, and FIG. 3 (C) is a partially enlarged cross-sectional view illustrating a state where a new inner ring raceway is formed by performing machining to the clad portion.
[FIG. 4] FIG. 4(A) is a partially enlarged schematic view illustrating a state where a bead is formed on the inner ring raceway, in a cross section taken along an imaginary flat plane perpendicular to a central axis of the inner ring, and FIG. 4(B) is a partially enlarged schematic view illustrating a state where a bead is formed on the inner ring raceway, in a cross section taken along an imaginary flat plane including the central axis of the inner ring.
[FIG. 5] FIG. 5 is a cross-sectional view schematically illustrating a state where an inner circumferential surface of the inner ring is restrained by a deformation preventing jig when laser cladding is performed.
[FIG. 6] FIG. 6 is a cross-sectional view illustrating a thrust cylindrical roller bearing including a bearing ring to which a repair method of a bearing ring of a thrust rolling bearing of a second example of an embodiment of the present disclosure can be applied.
[FIG. 7] FIG. 7 is a partially enlarged schematic view illustrating a state where a bead is formed on the raceway surface, in a cross section taken along an imaginary flat plane including a central axis of the thrust bearing ring.
[FIG. 8] FIG. 8 is a cross-sectional view illustrating an example of a clad portion that is formed by arranging a plurality of annular beads without a gap in the axial direction.
[FIG. 9] FIG. 9 is an enlarged cross-sectional view illustrating an annular bead.

### DESCRIPTION OF EMBODIMENTS

The processing method of a raceway surface of a rolling bearing according to an aspect of the present disclosure can be applied to either a repair method of a bearing ring of a rolling bearing or a manufacturing method of a bearing ring of a rolling bearing. In a case where the processing method of a raceway surface of a rolling bearing is applied to a repair method of a rolling bearing, a target of the processing is the raceway surface of the bearing ring, and in a case where the method is applied to a manufacturing method of a bearing ring of a rolling bearing, a target of the processing is a portion of a base member where a raceway surface is to be formed.

The processing method of a raceway surface of a rolling bearing according to an aspect of the present disclosure can be applied to a repair method or a manufacturing method of a bearing ring of a radial rolling bearing. The outer ring or the inner ring, which is a bearing ring of the radial rolling bearing, or a base member thereof, is cylindrical as a whole. The raceway surface or the portion where the raceway surface is to be formed has a shape corresponding to a shape of the rolling elements.

The processing method of a raceway surface of a rolling bearing according to an aspect of the present disclosure can be applied to a repair method or a manufacturing method of a bearing ring of a thrust rolling bearing. The bearing ring of the thrust rolling bearing, or a base member thereof, has a hollow circular plate shape at least at a portion that includes the raceway surface or a portion where the raceway surface is to be formed. The raceway surface or the portion where the raceway surface is to be formed has a shape corresponding to a shape of the rolling elements.

The processing method of a raceway surface of a rolling bearing according to an aspect of the present disclosure also includes a cladding step of irradiating a laser emitted from a laser source onto the raceway surface of the bearing ring or the portion of the base member where the raceway surface is to be formed, and relatively rotating the laser source and relatively displacing the laser source in the width direction of the raceway surface or the portion where the raceway surface is to be formed with respect to the bearing ring or the base member, while supplying a filler material to the portion irradiated with the laser, forming a clad portion constituted by a bead on the raceway surface or the portion where the raceway surface is to be formed. As the filler material, a powder filler material is usually used, but a filler material of another form such as a wire filler material can also be applied.

In a case where the rolling bearing is a radial rolling bearing, the width direction, that is, a relative displacement direction of the laser source with respect to the bearing ring or the base member, is the axial direction. On the other hand, in a case where the rolling bearing is a thrust rolling bearing, the width direction, that is, a relative displacement direction of the laser source with respect to the bearing ring or the base member, is the radial direction.

In the processing method of a raceway surface of a rolling bearing according to an aspect of the present disclosure, in the cladding step, (1) a clad portion that is formed by arranging a plurality of annular beads without a gap in the width direction is formed on the raceway surface or the portion where the raceway surface is to be formed. In this case, first, an annular bead is formed at one end portion in the width direction of the raceway surface or the portion where the raceway surface is to be formed, by relatively rotating the laser source with respect to the bearing ring or the base member. Next, a next bead is formed at a portion adjacent to the second side in the width direction of the bead by relatively displacing the laser source in the width direction with respect to the bearing ring or the base member and then relatively rotating the laser source. Further, sequentially in the same manner, a next bead is formed at a portion adjacent to the second side in the width direction of the bead formed earlier, whereby the clad portion is formed from the first-side end portion in the width direction to the second-side end portion in the width direction of the raceway surface or the portion where the raceway surface is to be formed.

In the processing method of a raceway surface of a rolling bearing according to an aspect of the present disclosure, in the cladding step, (2) a clad portion that is composed of one bead wound without a gap is formed on the raceway surface or the portion where the raceway surface is to be formed. In this case, the clad portion is formed by relatively rotating and relatively displacing the laser source with respect to the bearing ring or the base member so that the laser source reaches a portion adjacent to the second side in the width direction of the bead that has already been formed each time the laser source relatively rotates, and extending the one bead from the first-side end portion in the width direction to the second-side end portion in the width direction of the raceway surface or the portion where the raceway surface is to be formed. In a case where the rolling bearing is a radial rolling bearing, the one bead is wound helically. On the other hand, in a case where the rolling bearing is a thrust rolling bearing, the one bead is wound spirally.

In particular, in the processing method of a raceway surface of a rolling bearing according to an aspect of the present disclosure, in the cladding step, the irradiation direction of the laser with respect to the raceway surface or the portion where the raceway surface is to be formed is set to a forward-inclined direction with respect to a normal direction at the portion irradiated with the laser, in relation to the relative displacement direction of the laser source with respect to the bearing ring or the base member.

In the processing method of a raceway surface of a rolling bearing according to an aspect of the present disclosure, the inclination angle with respect to the normal direction can be set to 5 degrees or more and less than 90 degrees, preferably 10 degrees or more and 20 degrees or less, and more preferably 15 degrees or more and 20 degrees or less.

The processing method of a raceway surface of a rolling bearing according to an aspect of the present disclosure can be applied to a repair method or a manufacturing method of a bearing ring of a radial rolling bearing. In this case, the raceway surface is provided on an inner circumferential surface or an outer circumferential surface of a bearing ring. Alternatively, the portion where the raceway surface is to be formed is at least a part in the axial direction of an inner circumferential surface or an outer circumferential surface of a cylindrical base member. The relative displacement direction of the laser source is the axial direction. The raceway surface is provided over an entire circumference of the clad layer by performing machining to a surface of the clad layer.

The processing method of a raceway surface of a rolling bearing according to an aspect of the present disclosure can be applied to a repair method or a manufacturing method of a bearing ring of a thrust rolling bearing. In this case, the raceway surface is provided on a side surface in the axial direction of a bearing ring. Alternatively, the portion where the raceway surface is to be formed is at least a part in the radial direction of a side surface in the axial direction of a hollow circular plate-shaped base member. The relative displacement direction of the laser source is the radial direction. The raceway surface is provided over an entire circumference of the clad layer by performing machining to a surface of the clad layer.

In the following, the processing method of a raceway surface of a rolling bearing according to an aspect of the present disclosure will be described in detail by a first example in which the processing method is applied to a repair method or a manufacturing method of a bearing ring of a radial rolling bearing, and a second example in which the processing method is applied to a repair method or a manufacturing method of a bearing ring of a thrust bearing.

### [First Example]

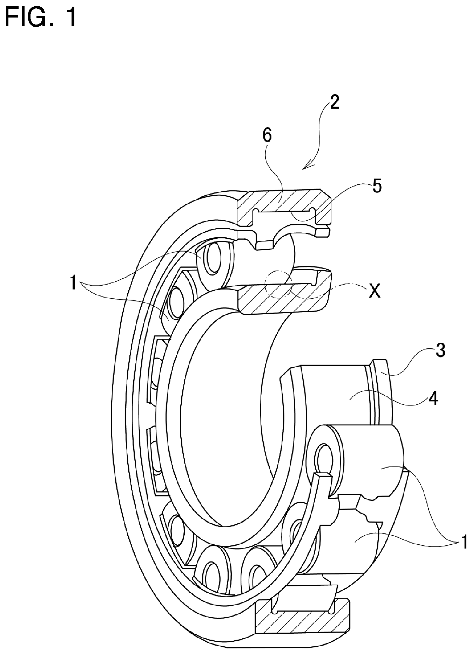

A first example of an embodiment of the present disclosure will be described using FIG. 1 to FIG. 5. In the present example, as illustrated in FIG. 1, a case where a repair method of a bearing ring of a radial rolling bearing according to an aspect of the present disclosure is applied to an inner ring 3 of a radial cylindrical roller bearing 2 that uses cylindrical rollers (including needles) as rolling elements 1 will be described.

However, the repair method of a bearing ring of a radial rolling bearing according to an aspect of the present disclosure can also target an outer ring of a radial cylindrical roller bearing, an inner ring and/or an outer ring of a radial tapered roller bearing that uses tapered rollers as rolling elements, an inner ring and/or an outer ring of a radial ball bearing that uses balls, or an inner ring and/or an outer ring of a radial self-aligning roller bearing that uses spherical rollers.

Further, the manufacturing method of a bearing ring of a radial rolling bearing according to an aspect of the present disclosure can target an inner ring and/or an outer ring of a radial cylindrical roller bearing, an inner ring and/or an outer ring of a radial tapered roller bearing that uses tapered rollers as rolling elements, an inner ring and/or an outer ring of a radial ball bearing that uses balls, or an inner ring and/or an outer ring of a radial self-aligning roller bearing that uses spherical rollers.

Further, the repair method and the manufacturing method of a bearing ring of a thrust rolling bearing according to an aspect of the present disclosure can target a bearing ring of a thrust cylindrical roller bearing that uses cylindrical rollers (including needles) as rolling elements as illustrated in the second example, a bearing ring of a thrust tapered roller bearing that uses tapered rollers, a bearing ring of a thrust ball bearing that uses balls, or a bearing ring of a thrust self-aligning roller bearing that uses spherical rollers.

The repair method of a bearing ring of a radial rolling bearing according to an aspect of the present disclosure and the repair method of a bearing ring of a thrust rolling bearing according to an aspect of the present disclosure can be preferably applied to a large-sized rolling bearing that supports a large load, such as a rolling bearing that supports a roll neck of a steel rolling mill. That is, the repair method of a bearing ring of a radial rolling bearing according to an aspect of the present disclosure and the repair method of a bearing ring of a thrust rolling bearing according to an aspect of the present disclosure can particularly remarkably obtain a cost reduction effect and a carbon dioxide emission reduction effect when applied to a bearing ring of a large-sized rolling bearing.

Further, with the manufacturing method of a bearing ring of a radial rolling bearing according to an aspect of the present disclosure and the manufacturing method of a bearing ring of a thrust rolling bearing according to an aspect of the present disclosure, the clad layer provided with the raceway surface can be composed of a metal material different from a metal material constituting the base member. Therefore, it is easier to adjust the raceway surface to a desired property.

### <Structure of Radial Cylindrical Roller Bearing>

The radial cylindrical roller bearing 2 includes an inner ring 3 that has an inner ring raceway 4 over an entire circumference on an outer circumferential surface thereof; an outer ring 6 that has an outer ring raceway 5 over an entire circumference on an inner circumferential surface thereof and that is arranged so as to be coaxial with the inner ring 3 on the outer side in the radial direction of the inner ring 3; and a plurality of rolling elements 1 that are each formed in a columnar shape and that are arranged between the inner ring raceway 4 and the outer ring raceway 5 so as to be able to roll freely.

In the description of the present example, the axial direction, the radial direction, and the circumferential direction refer to the axial direction, the radial direction, and the circumferential direction of the inner ring 3 unless otherwise specified. The axial direction, the radial direction, and the circumferential direction of the inner ring 3 coincide with the axial direction, the radial direction, and the circumferential direction of the outer ring 6. In the present example, the axial direction corresponds to the width direction of the raceway surface or the portion where the raceway surface is to be formed. Further, the first side in the axial direction (the width direction) refers to the left side in FIG. 1 to FIG. 3(C) and FIG. 4(B), and the second side in the axial direction (the width direction) refers to the right side in FIG. 1 to FIG. 3(C) and FIG. 4(B).

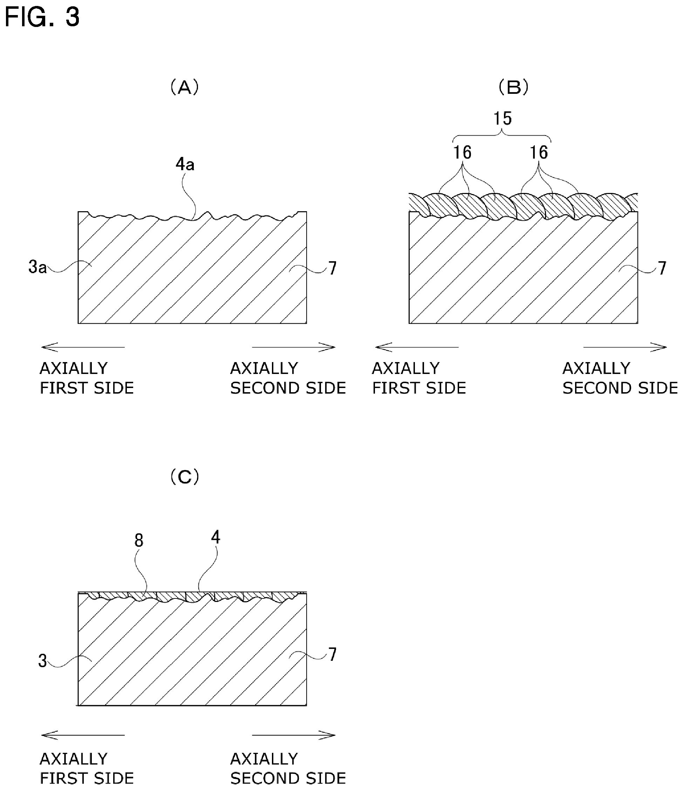

In the present example, the inner ring 3 is repaired by the repair method of a bearing ring of a radial rolling bearing of the present disclosure. The inner ring 3 is basically composed of an original (used) inner ring 3a (see FIG. 3A) before repair as a base member 7.

In a case where the bearing ring is manufactured by the manufacturing method of a bearing ring of a radial rolling bearing according to an aspect of the present disclosure or the manufacturing method of a bearing ring of a thrust rolling bearing according to an aspect of the present disclosure, that is, in a case where an unused bearing ring is manufactured from scratch, the bearing ring is composed of a cylindrical or hollow circular plate-shaped metal member having no raceway surface on a surface thereof as a base member.

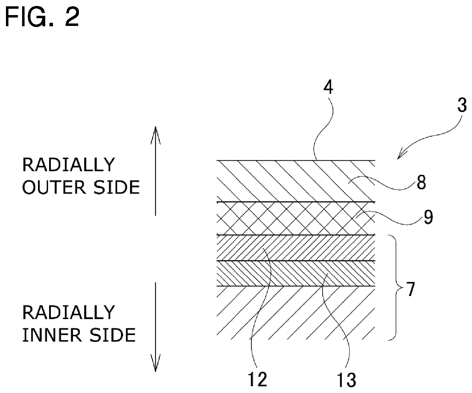

As illustrated in FIG. 2, the inner ring 3 of the present example includes, in a surface portion of at least a portion including the inner ring raceway 4, from a surface side thereof, a clad layer 8 composed of a metal material different from the base member 7; and a mixed layer 9 of the metal material of the base member 7 and the metal material of the clad layer 8, which exists in a portion located directly below the clad layer 8.

The base member 7 has a cylindrical shape and is composed of a metal material made of a hard metal such as high carbon chromium steel such as SUJ2 to SUJ4, high carbon chromium steel to which carburizing or carbonitriding is performed, carbon steel such as S53C, and carburized steel such as SCr420 and SCM420. In a state before being repaired, the base member 7 alone constitutes the inner ring 3a, and an original inner ring 3a has an original inner ring raceway 4a on an outer circumferential surface thereof.

The clad layer 8 covers, over an entire circumference, a portion of the outer circumferential surface of the base member 7 that includes the original inner ring raceway 4a. The repaired inner ring raceway 4 is formed on an outer circumferential surface of the clad layer 8. The clad layer 8 is composed of a metal material, such as an Fe-based alloy, a Cu-based alloy, a Ni-based alloy, a Co-based alloy, or a carbon alloy, that can sufficiently ensure bonding strength with the base member 7 and that can sufficiently ensure the performance of the inner ring raceway 4.

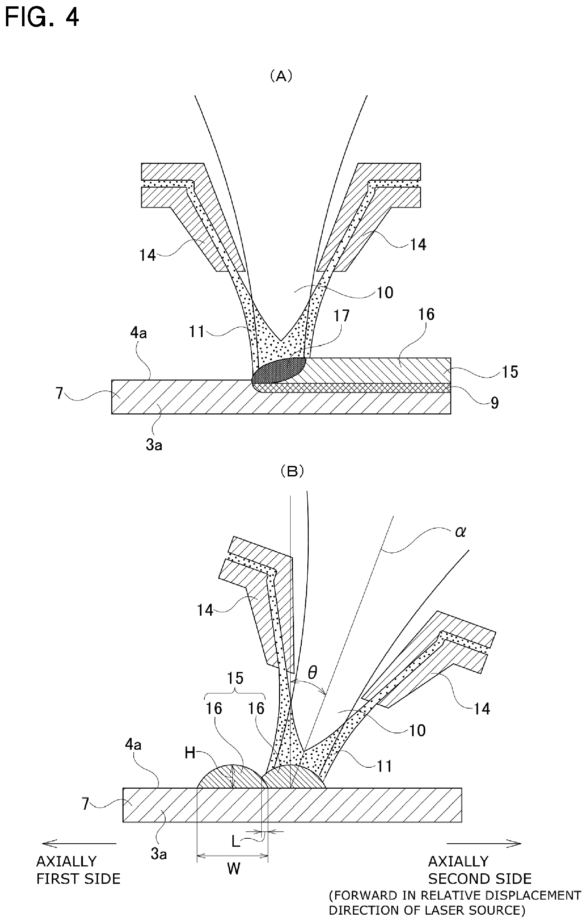

The mixed layer 9 is a layer in which the metal material of the base member 7 and the metal material of the clad layer 8 are mixed. More specifically, the mixed layer 9 is formed by melting, mixing, and solidifying the metal material constituting the original inner ring 3a (the base member 7) and a powder filler material 11, which is a metal material (a filler material) of the clad portion 15, during repair. That is, as illustrated in FIG. 4(A) and FIG. 4(B), when each bead 16 constituting the clad portion 15 is formed by laser cladding, a laser 10 emitted from the laser source is irradiated onto the original inner ring raceway 4a, and the powder filler material 11 is supplied to a portion of the original inner ring raceway 4a irradiated with the laser 10. As a result, the powder filler material 11 is heated and melted, and is solidified, whereby the bead 16 is formed.

At this time, by the irradiation of the laser 10, the metal material existing in a surface layer portion of the original inner ring raceway 4a irradiated with the laser 10 is heated until it becomes equal to or higher than a melting point and is melted, and is mixed with the melted powder filler material 11. Therefore, the mixed layer 9 is formed at a boundary portion between the base member 7 and the clad portion 15 by solidifying, in a state where the metal material of the base member 7 and the metal material of the clad portion 15 are melted and mixed. The mixed layer 9 exists in a portion located directly below the clad layer 8 even after appropriate machining such as a cutting process, a grinding process, and a polishing process is performed on the clad portion 15 to form the clad layer 8 having the inner ring raceway 4 on a surface thereof.

The inner ring 3 has a re-hardened layer 12 in a portion located directly below the mixed layer 9, and has a re-tempered layer 13 in a portion located directly below the re-hardened layer 12. That is, the inner ring 3 includes, in a portion where the inner ring raceway 4 is formed, the clad layer 8; the mixed layer 9; the re-hardened layer 12; and the re-tempered layer 13 in this order from the outer side in the radial direction.

The re-hardened layer 12 is a portion of the base member 7 that is re-hardened by being heated to a temperature equal to or higher than a hardening temperature and lower than a melting point when the original inner ring raceway 4a is irradiated with the laser 10 during formation of the clad layer 8 by laser cladding.

The re-tempered layer 13 is a portion of the base member 7 that is tempered by being heated to a temperature equal to or higher than a tempering temperature and lower than the hardening temperature when the original inner ring raceway 4a is irradiated with the laser 10 during formation of the cladding layer 8 by laser cladding.

### <Repair Method of Inner Ring>

First, as illustrated in FIG. 3(A), the radial cylindrical roller bearing 2 in which damage such as wear and peeling has occurred on the original inner ring raceway 4a as a result of long-term use is removed from an installation location and disassembled, and the original inner ring 3a is taken out. As necessary, first, a surface of the original inner ring raceway 4a provided on the outer circumferential surface of the original inner ring 3a is degreased and cleaned. As a result, oil existing in the surface layer portion of the original inner ring raceway 4a is removed, and foreign matter such as wear powder and peeling debris and foreign matter such as moisture adhering to the surface of the original inner ring raceway 4a are removed.

A method for degreasing and cleaning the surface of the original inner ring raceway 4a is not particularly limited. For example, the degreasing and cleaning can be performed by solvent degreasing, alkali degreasing in which the surface is immersed in an alkaline solution, electrolytic degreasing in which an electric current is applied between a material immersed in an alkaline solution and an electrode, or the like. Additionally or alternatively, laser cleaning can be performed, or the surface can be cleaned with an organic solvent or the like and then dried by hot air drying, heat drying, or the like. As necessary, before degreasing and cleaning the surface of the original inner ring raceway 4a, the surface can be smoothed by performing appropriate machining such as a cutting process, a grinding process, and a polishing process to the original inner ring raceway 4a.

Next, as illustrated in FIG. 3(B), a cladding step is performed in which the clad portion 15 is formed by laser cladding so as to cover, over an entire circumference, an outer circumferential surface of a portion of the original inner ring 3a (the base member 7) where the original inner ring raceway 4a has been formed.

In the cladding step, the original inner ring raceway 4a is irradiated with the laser 10 emitted from the laser source (not illustrated), and the laser source and the original inner ring 3a are relatively rotated and relatively displaced in the axial direction while a powder filler material 11 is supplied from a nozzle 14 to a portion of the original inner ring raceway 4a irradiated with the laser 10 by being blown together with a shielding gas. As a result, the clad portion 15 that is formed by arranging a plurality of annular beads 16 without a gap in the axial direction or that is constituted by a bead wound helically without a gap is formed on the outer circumferential surface of the portion of the original inner ring 3a (the base member 7) that includes the original inner ring raceway 4a.

In the cladding step, the irradiation direction of the laser 10 with respect to the original inner ring raceway 4a is set to a forward-inclined direction with respect to a normal direction of the repaired inner ring raceway 4 (a normal direction at the portion irradiated with the laser 10), in relation to the relative displacement direction in the axial direction of the laser source with respect to the original inner ring 3a.

Specifically, in the present example, the laser source is relatively displaced toward the second side in the axial direction with respect to the original inner ring 3a. Further, the repaired inner ring raceway 4 is constituted by a cylindrical surface whose outer diameter does not change in the axial direction. Therefore, the original inner ring raceway 4a is irradiated with the laser 10 emitted from the laser source from a direction inclined toward the second side in the axial direction (the right side in FIG. 4B) with respect to the radial direction of the original inner ring 3a (the up-down direction in FIG. 4B), that is, from a direction of a imaginary straight line α that goes toward the second side in the axial direction as it goes toward the outer side in the radial direction. Then, one annular bead 16 is formed by rotating the original inner ring 3a once with respect to the laser source while supplying the powder filler material 11 from the nozzle 14 to the portion irradiated with the laser 10 by blowing it together with the shielding gas. The bead 16 has a substantially partially elliptical or substantially rectangular cross-sectional shape.

Although not limited thereto, the inclination angle θ of the irradiation direction of the laser 10 (the irradiation angle of the laser 10) with respect to the normal direction of the inner ring raceway 4 can be set to 5 degrees or more and less than 90 degrees, preferably 10 degrees or more and 20 degrees or less, and more preferably 15 degrees or more and 20 degrees or less. In a case where the irradiation angle θ of the laser 10 is less than 5 degrees, when the laser 10 is irradiated in order to form the next bead 16 at a portion adjacent to the second side in the axial direction of the previously formed bead 16, there is a possibility that a portion located on the inner side in the radial direction of an end portion on the second side in the axial direction of the previously formed bead 16 cannot be sufficiently heated, and the occurrence of an internal defect cannot be sufficiently prevented.

In the present example, a processing device in which the nozzle 14 that ejects the powder filler material 11 and the shielding gas is supported and fixed around the laser source that emits the laser 10 is used. Therefore, when the irradiation angle θ of the laser 10 is changed, the blowing angle of the powder filler material 11 and the shielding gas from the nozzle 14 also changes. However, when implementing the present disclosure, a processing device having a structure in which the blowing angle of the powder filler material 11 and the shielding gas from the nozzle 14 can be adjusted independently of the irradiation angle of the laser 10 can also be used. In any case, when laser cladding is performed, the powder filler material 11 and the shielding gas are blown onto the portion of the original inner ring raceway 4a irradiated with the laser 10.

The output of the laser 10 is appropriately set according to a height H in the radial direction of the bead 16 (a height in the radial direction of a portion of the bead 16 having the largest height in the radial direction), a width W in the axial direction of the bead 16 (a width in the axial direction of a portion of the bead 16 having the largest width in the axial direction), or the like. For example, in a case where the inner ring 3a of a single-row cylindrical roller bearing whose nominal number is NUP206 is targeted, and the height H in the radial direction of the bead 16 is approximately 1.0 mm or more and 1.5 mm or less, and the width W in the axial direction is approximately 4.0 mm or more and 6.0 mm or less, the output of the laser 10 can be set to approximately 2.5 kW or more and 3.5 kW or less, but is not limited thereto.

The powder filler material 11 is composed of a metal powder such as an Fe-based alloy, a Cu-based alloy, a Ni-based alloy, a Co-based alloy, or a carbon alloy. An appropriate amount of the powder filler material 11 is supplied according to the outer diameter dimension of the original inner ring 3a, the height H in the radial direction and the width W in the axial direction of the bead 16, or the like. When implementing the present disclosure, a wire filler material can also be used instead of the powder filler material 11.

Next, the laser source is relatively displaced toward the second side in the axial direction with respect to the original inner ring 3a. Specifically, the laser source is displaced toward the second side in the axial direction, or the original inner ring 3a is displaced toward the first side in the axial direction. At this time, the amount of relative displacement in the axial direction of the original inner ring 3a with respect to the laser source is adjusted so that a gap does not exist between two beads 16 adjacent to each other in the axial direction, that is, between the bead 16 on the first side in the axial direction formed earlier and the bead 16 on the second side in the axial direction to be formed next.

Specifically, on a portion on the second side in the axial direction of the bead 16 on the first side in the axial direction formed earlier of the two beads 16 adjacent to each other in the axial direction, a portion on the first side in the axial direction of the bead 16 on the second side in the axial direction is arranged so as to overlap in the radial direction. In other words, the bead 16 on the second side in the axial direction is formed so as to cover, with the portion on the first side in the axial direction thereof, the portion on the second side in the axial direction of the bead 16 on the first side in the axial direction.

A dimension L in the axial direction of a portion where two beads 16 adjacent to each other in the axial direction overlap in the radial direction is appropriately determined according to the width W in the axial direction, the height H in the radial direction, or the like of the bead 16. For example, in a case where the inner ring 3a of a single-row cylindrical roller bearing whose nominal number is NUP206 is targeted, and the width W in the axial direction of the bead 16 is approximately 4.0 mm or more and 6.0 mm or less, and the height H in the radial direction is approximately 1.0 mm or more and 1.5 mm or less, the dimension L in the axial direction of the portion where two beads 16 adjacent to each other in the axial direction overlap in the radial direction can be set to 1.0 mm or more and 3.5 mm or less, preferably 2.0 mm or more and 3.0 mm or less, but is not limited thereto. When the dimension L in the axial direction is smaller than 1.0 mm, a gap is generated between the beads 16, and there is a possibility that the original inner ring raceway 4a is exposed. When the dimension L in the axial direction is larger than 3.5 mm, there is a possibility that material cost and processing time increase.

After relatively displacing the laser source toward the second side in the axial direction with respect to the original inner ring 3a, one annular bead 16 is formed by irradiating the original inner ring raceway 4a again with the laser 10 from the direction inclined with respect to the normal direction of the inner ring raceway 4 (the radial direction of the original inner ring 3a in the present example), and rotating the original inner ring 3a once with respect to the laser source while supplying the powder filler material 11 from the nozzle 14 to a portion irradiated with the laser 10 by blowing it together with the shielding gas.

As described above, in the cladding step of the present example, the clad portion 15 that is formed by arranging a plurality of annular beads 16 without a gap in the axial direction is formed by repeating the operation of forming one annular bead 16 and the operation of relatively displacing the laser source and the original inner ring 3a in the axial direction.

When implementing the repair method of a bearing ring of a radial rolling bearing according to an aspect of the present disclosure, a clad portion constituted by a bead wound helically without a gap can also be formed on an outer circumferential surface of the original inner ring by relatively displacing the original inner ring in the axial direction while relatively rotating the original inner ring with respect to the laser source. In this case, the amount of relative displacement in the axial direction per one rotation of the original inner ring with respect to the laser source is adjusted so that a gap does not exist between portions of the bead adjacent to each other in the axial direction.

When the laser 10 is irradiated to the original inner ring raceway 4a in order to perform laser cladding, of the original inner ring 3a (the base member 7), the metal material existing in the surface layer portion of the original inner ring raceway 4a irradiated with the laser 10 is melted together with the powder filler material 11, which is a metal material constituting a weld bead 8b, and a molten pool 17 in which these are mixed is formed. Then, when an irradiation position of the laser 10 deviates from the molten pool 17 as the laser source and the original inner ring 3a relatively rotate, the metal material constituting the molten pool 17 is cooled and solidified. As a result, the clad portion 15 (the bead 16) is formed on the original inner ring raceway 4a, and at the same time, the mixed layer 9 of the metal material of the base member 7 and the metal material of the clad portion 15 (the bead 16) is formed at a boundary portion between the base member 7 and the bead 16.

Further, when the laser 10 is irradiated to the original inner ring raceway 4a in order to perform laser cladding, the metal material of a portion of the original inner ring 3a (the base member 7) existing below the surface layer portion of the original inner ring raceway 4a is also heated. The portion located directly below the mixed layer 9 is re-hardened by being heated to a temperature equal to or higher than a hardening temperature and lower than a melting point. As a result, the re-hardened layer 12 is formed in the portion located directly below the mixed layer 9.

Furthermore, the portion located directly below the re-hardened layer 12 is tempered by being heated to a temperature equal to or higher than a tempering temperature and lower than the hardening temperature. As a result, the re-tempered layer 13 is formed in the portion existing directly below the re-hardened layer 12. Even if the portion existing below the re-tempered layer 13 is heated, almost no structural change occurs because the temperature is lower than the tempering temperature. FIG. 3(A) to FIG. 3(C) and FIG. 4 are illustrated with the re-hardened layer 12 and the re-tempered layer 13 omitted.

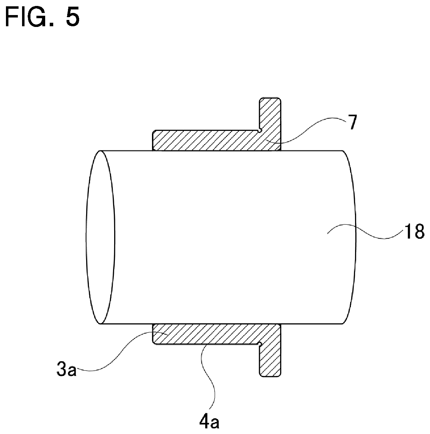

When the clad portion 15 is formed on the original inner ring raceway 4a by laser cladding, at least a part of the surface of the original inner ring 3a (the base member 7) excluding a portion where the original inner ring raceway 4a exists can be restrained. As a result, deformation of the base member 7 due to an influence of heat generated by the irradiation of the laser 10 can be suppressed. For example, as illustrated in FIG. 5, a columnar deformation preventing jig 18 can be fitted into the original inner ring 3a (the base member 7) to restrain the inner circumferential surface of the original inner ring 3a.

In addition to the inner circumferential surface of the original inner ring 3a (the base member 7), or instead of the inner circumferential surface of the original inner ring 3a, a side surface in the axial direction of the original inner ring 3a (a side surface on the first side in the axial direction and/or on the second side in the axial direction) can also be restrained. Further, in a case where the original inner ring 3a is not deformed or is deformed to an extent that does not cause a problem depending on the heat generated by the irradiation of the laser 10, the attachment of the deformation preventing jig 18 can be omitted.

Further, the original inner ring 3a (the base member 7) can be preheated before performing laser cladding. By preheating the original inner ring 3a, it is possible to prevent a temperature of a portion of the original inner ring 3a irradiated with the laser 10 from rapidly changing when irradiating the original inner ring raceway 4a with the laser 10, and to prevent damage such as a crack from occurring in the portion. However, a preheating temperature is preferably equal to or lower than a tempering temperature, and specifically, is preferably 200 °C or lower. That is, when the preheating temperature exceeds the tempering temperature, the surface of the original inner ring 3a (the base member 7) is tempered, and there is a possibility that the hardness of the surface of the original inner ring 3a decreases.

After forming the clad portion 15 on the outer circumferential surface of the portion of the original inner ring 3a (the base member 7) including the original inner ring raceway 4a by laser cladding, a machining step of forming a new inner ring raceway 4 (see FIG. 3(C)) by performing appropriate machining such as a cutting process, a grinding process, and a polishing process to the clad portion 15 is performed. As a result, a new (repaired) inner ring 3 is obtained. The processing for forming the new inner ring raceway 4 is basically the same as the processing for forming the original inner ring raceway 4a on the outer circumferential surface of the original inner ring 3a.

In the present example, a grindstone is pressed against the outer circumferential surface of the clad portion 15, and while swinging the grindstone about a center of curvature of a generatrix shape (a cross-sectional shape) of the new inner ring raceway 4, the original inner ring 3a provided with the clad portion 15 is rotated about a central axis thereof. As a result, a new inner ring raceway 4 is formed by performing a polishing process to the outer circumferential surface of the clad portion 15, and a new inner ring 3 is obtained by further performing a cleaning treatment or the like as necessary. The outer circumferential surface of the portion of the new inner ring 3 including the inner ring raceway 4a is constituted by the clad layer 8 formed after the polishing process.

The repaired inner ring 3 obtained as described above is combined with the outer ring 6 and the rolling elements 1 to assemble a repaired radial cylindrical roller bearing 2, which is incorporated again into the installation location thereof.

When implementing the manufacturing method of a bearing ring of a radial rolling bearing according to an aspect of the present disclosure, the method can be basically implemented in the same manner as the repair method of the present example, except that a cylindrical base member having no raceway surface on a surface thereof is used.

With the present example, since the radial cylindrical roller bearing 2 can be repaired and reused, cost can be reduced and a carbon dioxide emission amount can be reduced as compared with a case where the radial cylindrical roller bearing 2 is newly manufactured and replaced.

Further, in the present example, the irradiation direction of the laser 10 with respect to the original inner ring raceway 4a is set to a forward-inclined direction with respect to the normal direction of the inner ring raceway 4 (the radial direction of the original inner ring 3a in the present example), in relation to the relative displacement direction in the axial direction of the laser source with respect to the original inner ring 3a. Therefore, when the bead 16 on the second side in the axial direction is formed at a portion adjacent to the second side in the axial direction of the bead 16 on the first side in the axial direction formed earlier, a portion of the original inner ring raceway 4a located on the inner side in the radial direction of an end portion on the second side in the axial direction of the bead 16 on the first side in the axial direction can be sufficiently heated.

Therefore, in a portion of the original inner ring raceway 4a located on the inner side in the radial direction of an end portion on the second side in the axial direction of the bead 16 on the first side in the axial direction formed earlier, it is possible to prevent the molten metal material from solidifying at an early stage before a bubble generated internally is discharged. Therefore, it is possible to prevent an internal defect resulting from a bubble from occurring inside the clad portion 15 constituted by a plurality of annular beads 16.

### [Second Example]

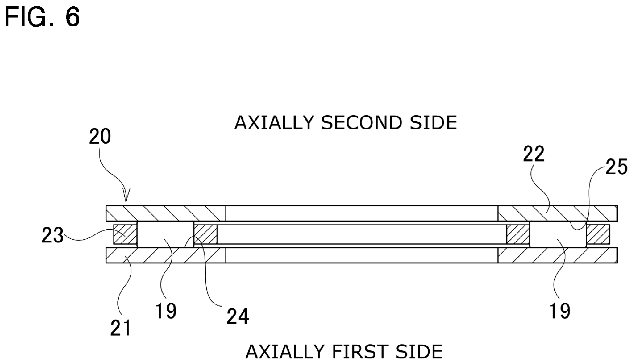

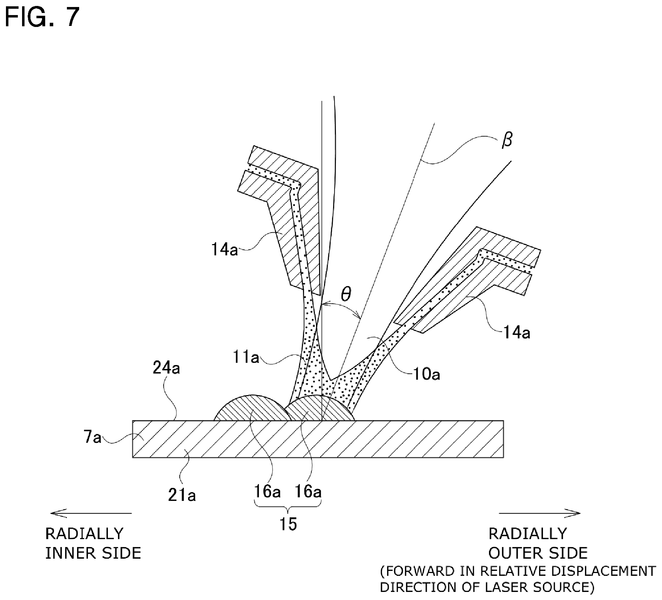

A second example of an embodiment of the present disclosure will be described using FIG. 6 and FIG. 7. The present example is an example in which one bearing ring 21 of a pair of bearing rings (thrust races) 21, 22 constituting a thrust cylindrical roller bearing 20 that uses cylindrical rollers (including needles) as rolling elements 19 is repaired by a repair method of a bearing ring of a thrust rolling bearing according to an aspect of the present disclosure.

### <Structure of Thrust Cylindrical Roller Bearing>

The thrust cylindrical roller bearing 20 includes a pair of bearing rings 21, 22; a plurality of rolling elements 19; and a cage 23.

In the description of the present example, the axial direction, the radial direction, and the circumferential direction refer to the axial direction, the radial direction, and the circumferential direction of the one bearing ring 21 unless otherwise specified. The axial direction, the radial direction, and the circumferential direction of the one bearing ring 21 coincide with the axial direction, the radial direction, and the circumferential direction of the other bearing ring 22. In the present example, the radial direction corresponds to the width direction of the raceway surface or the portion where the raceway surface is to be formed. The first side in the width direction corresponds to one of the inner side in the radial direction and the outer side in the radial direction, and the second side in the width direction corresponds to the other of the inner side in the radial direction and the outer side in the radial direction. Further, the first side in the axial direction refers to the lower side in FIG. 6 and FIG. 7, and the second side in the axial direction refers to the upper side in FIG. 6 and FIG. 7.

Each of the pair of bearing rings 21, 22 is formed in a hollow circular plate shape, and has raceway surfaces 24, 25 on side surfaces in the axial direction facing each other. That is, of the pair of bearing rings 21, 22, the one bearing ring 21 arranged on the first side in the axial direction has the raceway surface 24 on a side surface on the second side in the axial direction, and the other bearing ring 22 arranged on the second side in the axial direction has the raceway surface 25 on a side surface on the first side in the axial direction. The raceway surfaces 24, 25 are constituted by flat surfaces perpendicular to a central axis O of the thrust cylindrical roller bearing 20.

The plurality of rolling elements 19 are formed in a columnar shape. Each of the rolling elements 19 is arranged between the raceway surfaces 24, 25 of the pair of bearing rings 21, 22 so as to be able to roll freely, in a state where a central axis thereof is oriented in a radial direction and is held by the cage 23.

In the present example, the one bearing ring 21 is repaired by the repair method of a bearing ring of a thrust rolling bearing of the present disclosure. The bearing ring 21 is basically composed of an original bearing ring 21a before repair as a base member 7a.

The bearing ring 21 has basically the same layer structure as the inner ring 3 of the first example. That is, the bearing ring 21 includes, in a surface portion of at least a portion including the raceway surface 24, from a surface side thereof, a clad layer composed of a metal material different from the base member 7a; and a mixed layer of the metal material of the base member 7a and the metal material of the clad layer, which exists in a portion located directly below the cladded layer.

The base member 7a is formed in a hollow circular plate shape from a hard metal. In a state before being repaired, the base member 7a alone constitutes the bearing ring 21a, and the original bearing ring 21a has an original raceway surface 24a on a side surface on the second side in the axial direction.

The clad layer is made of a metal material that can sufficiently ensure bonding strength with the base member 7a and that can sufficiently ensure the performance of the raceway surface 24, and covers a portion of the side surface on the second side in the axial direction of the base member 7a that includes the original raceway surface 24a over an entire circumference. A new raceway surface 24 is provided on a side surface on the second side in the axial direction of the clad layer.

The mixed layer is formed during repair, by melting, mixing, and solidifying the metal material of the original bearing ring 21a (the base member 7a) and a powder filler material 11a, which is a metal material of the cladded portion 15a.

Furthermore, the bearing ring 21 has, in a portion located directly below the mixed layer, a re-hardened layer that is re-hardened by being heated to a temperature equal to or higher than a hardening temperature and lower than a melting point during repair, and has, in a portion located directly below the re-hardened layer, a re-tempered layer that is tempered by being heated to a temperature equal to or higher than a tempering temperature and lower than the hardening temperature during repair.

### <Repair Method of Bearing Ring>

First, the thrust cylindrical roller bearing 20 is disassembled to take out the original bearing ring 21a to be repaired. Further, as necessary, the original raceway surface 24a is degreased and cleaned to remove oil and/or foreign matter.

Next, a cladding step of forming the clad portion 15a is performed so as to cover, over an entire circumference, a side surface on the second side in the axial direction of a portion of the original raceway surface 24a (the base member 7a) where the original raceway surface 24a is formed, by laser cladding.

In the cladding step, the original raceway surface 24a is irradiated with a laser 10a emitted from a laser source (not illustrated), and the laser source and the original raceway surface 24a are relatively rotated and relatively displaced in the radial direction while supplying the powder filler material 11a from the nozzle 14 to a portion of the original raceway surface 24a irradiated with the laser 10a by being blown together with a shielding gas. As a result, the clad portion 15 that is formed by arranging a plurality of annular beads 16a without a gap in the radial direction or that is constituted by a bead wound spirally without a gap is formed on a side surface on the second side in the axial direction of a portion of the original bearing ring 21 (the base member 7a) that includes the original raceway surface 24a.

In the cladding step, the irradiation direction of the laser 10a with respect to the original raceway surface 24a is set to a forward-inclined direction with respect to a normal direction of the repaired raceway surface 24 (a normal direction at the portion irradiated with the laser 10a), in relation to the relative displacement direction in the radial direction of the laser source with respect to the original bearing ring 21a.

In the present example, the laser source is relatively displaced toward the outer side in the radial direction with respect to the original bearing ring 21a. Further, the repaired raceway surface 24 is constituted by a flat surface perpendicular to the central axis O of the thrust cylindrical roller bearing 20. Therefore, one annular bead 16a is formed by irradiating the original raceway surface 24a with the laser 10a emitted from the laser source from a direction toward the outer side in the radial direction with respect to the axial direction of the original bearing ring 21a, that is, from a direction of a imaginary straight line β that goes toward the outer side in the radial direction as it goes toward the second side in the axial direction, and rotating the original bearing ring 21a once with respect to the laser source while supplying the powder filler material 11a from a nozzle 14a to a portion irradiated with the laser 10a by blowing it together with a shielding gas.

The inclination angle θ of the irradiation direction of the laser 10 (the irradiation angle of the laser 10) with respect to the normal direction of the raceway surface 24 can be set to 5 degrees or more and less than 90 degrees, preferably 10 degrees or more and 20 degrees or less, and more preferably 15 degrees or more and 20 degrees or less, but is not limited thereto.

Next, the laser source is relatively displaced toward the outer side in the radial direction with respect to the original bearing ring 21a. Specifically, the laser source is displaced toward the outer side in the radial direction, or the original bearing ring 21a is displaced toward the inner side in the radial direction. At this time, an amount of relative displacement in the radial direction of the original bearing ring 21a with respect to the laser source is adjusted so that a gap does not exist between two beads 16 adjacent to each other in the radial direction, that is, between the bead 16 on the inner side in the radial direction formed earlier and the bead 16 on the outer side in the radial direction to be formed next.

Specifically, on a portion on the outer side in the radial direction of the bead 16 on the inner side in the radial direction formed earlier of the two beads 16 adjacent to each other in the radial direction, a portion on the inner side in the radial direction of the bead 16 on the outer side in the radial direction is arranged so as to overlap in the axial direction. In other words, the bead 16 on the outer side in the radial direction is formed so as to cover, with the portion on the inner side in the radial direction thereof, the portion on the outer side in the radial direction of the bead 16 on the inner side in the radial direction.

After relatively displacing the laser source toward the outer side in the radial direction with respect to the original bearing ring 21a, one annular bead 16a is formed by irradiating the original raceway surface 24a again with the laser 10 from a direction inclined with respect to the axial direction of the original bearing ring 21a, and rotating the original bearing ring 21a once with respect to the laser source while supplying the powder filler material 11 from the nozzle 14 to the portion irradiated with the laser 10 by blowing it together with the shielding gas.

As described above, in the present example, the clad portion 15a that is formed by arranging a plurality of annular beads 16a without a gap in the axial direction is formed by repeating the operation of forming one annular bead 16a and the operation of relatively displacing the laser source and the original bearing ring 21a in the radial direction.

In the present example, the laser source is relatively displaced toward the outer side in the radial direction with respect to the original bearing ring 21a, but when implementing the repair method of a bearing ring of a thrust rolling bearing according to an aspect of the present disclosure, the laser source can also be relatively displaced toward the inner side in the radial direction with respect to the original bearing ring. In this case, the original raceway surface is irradiated with the laser emitted from the laser source from the inner side in the radial direction with respect to the axial direction of the original bearing ring.

Further, when implementing the repair method of a bearing ring of a thrust rolling bearing according to an aspect of the present disclosure, a clad portion constituted by a bead wound spirally without a gap can also be formed on a side surface of the original bearing ring by relatively displacing the original bearing ring in the radial direction while relatively rotating the original bearing ring with respect to the laser source. In this case, an amount of relative displacement in the radial direction per one rotation of the original bearing ring with respect to the laser source is adjusted so that a gap does not exist between portions of the bead adjacent to each other in the radial direction.

When implementing the manufacturing method of a bearing ring of a thrust rolling bearing according to an aspect of the present disclosure, the method can be basically implemented in the same manner as the repair method of the present example, except that a hollow circular base member having no raceway surface on a surface thereof is used.

With the present example, when forming the bead 16a on the outer side in the radial direction at a portion adjacent to the outer side in the radial direction of the bead 16a on the inner side in the radial direction formed earlier, a portion of the original raceway surface 24a located on the first side in the axial direction of an end portion on the outer side in the radial direction of the bead 16a on the inner side in the radial direction can be sufficiently heated. Therefore, in a portion of the original raceway surface 24a located on the first side in the axial direction of the end portion on the outer side in the radial direction of the bead 16a on the inner side in the radial direction formed earlier, it is possible to prevent the molten metal material from solidifying at an early stage before a bubble generated internally is discharged. Therefore, it is possible to prevent an internal defect resulting from a bubble from occurring inside the clad portion 15a constituted by a plurality of annular beads 16a.

Configurations and effects of other portions of the second example are the same as those of the first example.

### EXAMPLES

An experiment performed in order to confirm the effects of the present disclosure will be described.

This experiment was performed using a radial cylindrical roller bearing 2 as illustrated in FIG. 1 as a test piece. Two types of test pieces were prepared: one repaired by the repair method of a bearing ring of a radial rolling bearing according to an aspect of the present disclosure (an invention product), and one repaired by the conventional method (a comparison product).

The invention product was obtained by setting the inclination angle θ of the irradiation direction of the laser 10 with respect to the radial direction of the original inner ring 3a to 15 degrees when forming the clad portion 15 on the original inner ring raceway 4a by laser cladding, forming the clad portion 15 that is formed by arranging a plurality of annular beads 16 without a gap on the original inner ring raceway 4a, and then performing a polishing process to the clad portion 15 to form a new inner ring raceway 4.

On the other hand, in the comparison product, the laser was irradiated from the radial direction of the inner ring when forming the clad portion.

Conditions other than the irradiation direction of the laser during laser cladding are the same between the invention product and the comparison product.

Specifications of the cylindrical roller bearing used as the test piece and conditions of the laser cladding are as follows.

### <Specifications of Radial Cylindrical Roller Bearing>

Nominal number: NUP206
Inner diameter: 30 (mm)
Outer diameter: 62 (mm)
Width: 16 (mm)
Material of inner ring 3 and outer ring 6: SUJ2
Material of rolling element 1: SUJ2
Number of rolling elements 1: 13
Diameter of rolling element 1: 9 (mm)

### <Conditions of Laser Cladding of Invention Product>

Laser output: 3.0 (kW)
Material of powder filler material: powder high-speed steel
Supply amount of powder filler material: 30 (g/min)
Scanning speed (relative rotation speed of laser source with respect to inner ring): 900 (mm/min)
Number of beads constituting clad portion: 3

### <Conditions of Laser Cladding of Comparison Product>

Laser output: 3.0 (kW)
Material of powder filler material: powder high-speed steel
Supply amount of powder filler material: 30 (g/min)
Scanning speed: 1000 (mm/min)
Number of beads constituting clad portion: 2

Rolling fatigue life was measured for the invention product and the comparison product as described above. Specifically, the invention product and the comparison product were operated under the conditions described below, and the test was terminated when vibration of the radial cylindrical roller bearing began to increase, and the rolling fatigue life was defined when peeling occurring on the inner ring raceway was visually confirmed.

### <Operating Conditions and Life Test Conditions of Radial Cylindrical Roller Bearing>

Lubrication condition: mineral oil equivalent to ISO-VG68 (oil bath method)
Test load: 5 (kN)
   dynamic equivalent load/basic dynamic load rating (P/C) = 0.13
Rotation speed: 500 (min⁻¹)

Regarding the radial cylindrical roller bearing incorporating the comparison product, large vibration (vibration with a vibration acceleration of 4.5 mm/s² or more) occurred immediately after the initiation of the test. This is considered to be because, in the comparison product, an internal defect existing inside the clad portion was exposed on the surface of the inner ring raceway by polishing the clad portion. After operating the radial cylindrical roller bearing incorporating the comparison product for 100 hours, the radial cylindrical roller bearing was disassembled and the inner ring raceway of the comparison product was visually observed, and it was confirmed that peeling had occurred at a plurality of locations on the inner ring raceway. Furthermore, the comparison product was cut, and a cross section was observed.

On the other hand, in the radial rolling bearing incorporating the invention product, large vibration did not occur even after operating for 300 hours (the vibration acceleration was less than 2.5 mm/s²). After 300 hours had elapsed, the radial cylindrical roller bearing incorporating the invention product was disassembled and the inner ring raceway of the invention product was observed, and no peeling could be confirmed. Furthermore, the invention product was cut and a cross section was observed, but no noticeable damage was confirmed.

### REFERENCE SIGNS LIST

1 Rolling elements
2 Radial cylindrical roller bearing
3, 3a Inner ring
4, 4a Inner ring raceway
5 Outer ring raceway
6 Outer ring
7 Base member
8 Clad layer
9 Mixed layer
10 Laser
11 Powder filler material
12 Re-hardened layer
13 Re-tempered layer
14 Nozzle
15 Clad portion
16 Bead
17 Molten pool
18 Deformation preventing jig
19 Rolling element
20 Thrust cylindrical roller bearing
21 Bearing ring
22 Bearing ring
23 Cage
24 Raceway surface
25 Raceway surface
100 Inner ring
101 Inner ring raceway
102 Bead
103 Clad portion
104 Laser

## Claims

1. A processing method of a raceway surface of a rolling bearing, the method including:
a cladding step of irradiating a laser emitted from a laser source onto a raceway surface of a bearing ring or a portion of a base member where a raceway surface is to be formed, and supplying a filler material to a portion irradiated with the laser, while relatively rotating the laser source and relatively displacing the laser source in a width direction of the raceway surface or the portion where the raceway surface is to be formed with respect to the bearing ring or the base member, so as to form a clad portion that is formed by arranging a plurality of annular beads without a gap in the width direction, or constituted by a bead wound without a gap in the width direction, on the raceway surface or the portion where the raceway surface is to be formed; wherein
in the cladding step, an irradiation direction of the laser with respect to the raceway surface or the portion where the raceway surface is to be formed is set to a forward-inclined direction with respect to a normal direction at the portion irradiated with the laser, in relation to a relative displacement direction of the laser source with respect to the bearing ring or the base member.

2. The processing method of a raceway surface of a rolling bearing according to claim 1, wherein an inclination angle of the irradiation direction of the laser with respect to the normal direction is set to 5 degrees or more and less than 90 degrees.

3. A repair method of a bearing ring of a radial rolling bearing, the method including:
a cladding step of irradiating a laser emitted from a laser source onto a raceway surface provided on an inner circumferential surface or an outer circumferential surface of a bearing ring, and supplying a filler material to a portion of the raceway surface irradiated with the laser, while relatively rotating the laser source with respect to the bearing ring and relatively displacing the laser source in an axial direction, so as to form a clad portion that is formed by arranging a plurality of annular beads without a gap in the axial direction or that is constituted by a bead wound helically without a gap on the raceway surface, wherein
in the cladding step, an irradiation direction of the laser with respect to the raceway surface is set to a forward-inclined direction with respect to a normal direction of the raceway surface, in relation to a relative displacement direction in the axial direction of the laser source with respect to the bearing ring.

4. The repair method of a bearing ring of a radial rolling bearing according to claim 3, wherein an inclination angle of the irradiation direction of the laser with respect to the normal direction of the raceway surface is set to 5 degrees or more and less than 90 degrees.

5. A manufacturing method of a bearing ring of a radial rolling bearing,
the bearing ring of the radial rolling bearing including a cylindrical base member; a clad layer covering an inner circumferential surface or an outer circumferential surface of the base member over an entire circumference; and a raceway surface provided over an entire circumference on a surface of the clad layer, the method including:
a cladding step of irradiating a laser emitted from a laser source onto the inner circumferential surface or the outer circumferential surface of the base member, and supplying a filler material to a portion of the inner circumferential surface or the outer circumferential surface of the base member irradiated with the laser, while relatively rotating the laser source and relatively displacing the laser source in an axial direction with respect to the base member, so as to form a clad portion that is formed by arranging a plurality of annular beads without a gap in the axial direction or that is constituted by a bead wound helically without a gap on the inner circumferential surface or the outer circumferential surface of the base member; and
a machining step of performing machining to a surface of the clad portion, so as to form a cladded layer having the raceway surface on a surface thereof, wherein
in the cladding step, an irradiation direction of the laser with respect to the inner circumferential surface or the outer circumferential surface of the base member is set to a forward-inclined direction with respect to a normal direction of the inner circumferential surface or the outer circumferential surface of the base member, in relation to a relative displacement direction in the axial direction of the laser source with respect to the base member.

6. The manufacturing method of a bearing ring of a radial rolling bearing according to claim 5, wherein an inclination angle of the irradiation direction of the laser with respect to the normal direction of the inner circumferential surface or the outer circumferential surface of the base member is set to 5 degrees or more and less than 90 degrees.

7. A repair method of a bearing ring of a thrust rolling bearing, the method including:
a cladding step of irradiating a laser emitted from a laser source onto a raceway surface provided on a side surface in an axial direction of a bearing ring, and supplying a filler material to a portion of the raceway surface irradiated with the laser, while relatively rotating the laser source and relatively displacing the laser source in a radial direction with respect to the bearing ring, so as to form a clad portion that is formed by arranging a plurality of annular beads in the radial direction or that is constituted by a bead wound spirally without a gap on the raceway surface; wherein
in the cladding step, a irradiation direction of the laser with respect to the raceway surface is set to a forward-inclined direction with respect to a normal direction of the raceway surface, in relation to a relative displacement direction in the radial direction of the laser source with respect to the bearing ring.

8. The repair method of a bearing ring of a thrust rolling bearing according to claim 7, wherein an inclination angle of the irradiation direction of the laser with respect to the normal direction of the raceway surface is set to 5 degrees or more and less than 90 degrees.

9. A manufacturing method of a bearing ring of a thrust rolling bearing:
the bearing ring of the thrust rolling bearing including a hollow circular plate-shaped base member; a clad layer covering a side surface in an axial direction of the base member over an entire circumference; and a raceway surface provided over an entire circumference on a surface of the clad layer, the method including:
a cladding step of irradiating a laser emitted from a laser source onto the side surface in the axial direction of the base member, and supplying a filler material to a portion of the side surface in the axial direction of the base member irradiated with the laser, while relatively rotating the laser source and relatively displacing the laser source in the radial direction with respect to the side surface in the axial direction of the base member, so as to form a clad portion that is formed by arranging a plurality of annular beads without a gap in a radial direction or that is constituted by a bead wound spirally without a gap on the side surface in the axial direction of the base member; and
a machining step of performing machining to a surface of the clad portion, so as to form a clad layer having the raceway surface on a surface thereof, wherein
in the cladding step, an irradiation direction of the laser with respect to the side surface in the axial direction of the base member is set to a forward-inclined direction with respect to a normal direction of the side surface in the axial direction of the base member, in relation to a relative displacement direction in the radial direction of the laser source with respect to the bearing ring.

10. The manufacturing method of a bearing ring of a thrust rolling bearing according to claim 9, wherein an inclination angle of the irradiation direction of the laser with respect to the normal direction of the side surface in the axial direction of the base member is set to 5 degrees or more and less than 90 degrees.
